# EUROPEAN PATENT APPLICATION

(11) **EP 4 156 660 A1**
(43) Date of publication of application: **29.03.2023**
(21) Application number: 22753579.6
(22) Date of filing: 21.04.2022
(51) Int. Cl.: H04M 1/58, H04R 1/32, H04M 1/03

(54) **MOBILE TERMINAL THAT PREVENTS SOUND LEAKAGE AND SOUND OUTPUT METHOD FOR MOBILE TERMINAL**

(30) Priority: 10.08.2021 CN 202110915267
(71) Applicant: Honor Device Co., Ltd., Shenzhen, Guangdong 518040 (CN)
(72) Inventor: The designation of the inventor has not yet been filed
(74) Representative: Epping - Hermann - Fischer
(86) International application number: PCT/CN2022/088288
(87) International publication number: WO 2023/015940

(57) **Abstract**

This application provides a mobile terminal for preventing sound leakage and a sound output method for a mobile terminal. A screen sound production component is disposed on a back side of a screen. Therefore, when a user has a high requirement for a sound receiving effect, a high requirement for confidentiality of sound content, or a high requirement for sound quality, the mobile terminal mainly depends on the screen sound production component to drive the screen to vibrate, so as to produce sound, that is, the mobile terminal uses a privacy mode. In the privacy mode, a location at which the screen produces sound is close to the ear of the user. Therefore, it can be ensured that the user directly receives a large amount of sound produced by the screen, instead of mainly receiving sound by using a sound output hole on the mobile terminal. In this way, the following case can be avoided: When imposing a requirement on sound, the user can receive sound only by using a conventional earpiece mode on the mobile terminal. Therefore, the following problem can also be avoided: A large amount of sound produced by a first speaker component in the earpiece mode is leaked when the sound is output from the sound output hole.

## Description

This application claims priority to Chinese Patent Application No. 202110915267.3, filed with the China National Intellectual Property Administration on August 10, 2021 and entitled "MOBILE TERMINAL FOR PREVENTING SOUND LEAKAGE AND SOUND OUTPUT METHOD FOR MOBILE TERMINAL", which is incorporated herein by reference in its entirety.

### TECHNICAL FIELD

This application relates to the field of communication devices, and in particular, to a mobile terminal for preventing sound leakage and a sound output method for a mobile terminal.

### BACKGROUND

To implement a call function, a sound output hole is generally disposed in a non-screen region of a front side of a mobile terminal. When a user picks up the mobile terminal near the ear to receive sound, a location of the sound output hole may be directly opposite to the ear of the user, so that the user can clearly hear sound content.

However, as a screen-to-body ratio of the mobile terminal increases, a distance between a screen and a side frame becomes smaller, and the sound output hole is also closer to the side frame. For some mobile terminals, the side frame is connected to the front side by using a curved surface, and the sound output hole may be even disposed on the connecting curved surface. Because the location of the sound output hole is changed, a sound output location may deviate from the location of the ear of the user. In this case, partial sound output from the sound output hole is leaked to an environment, and is not received by the user.

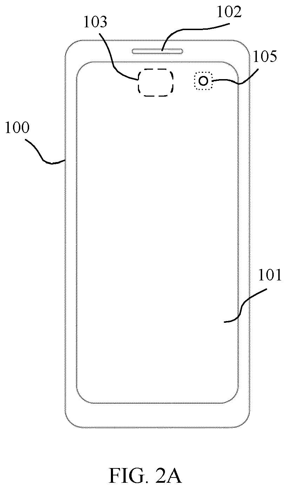

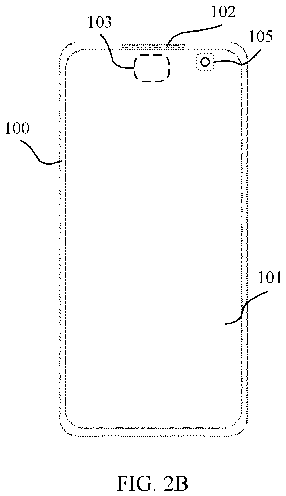

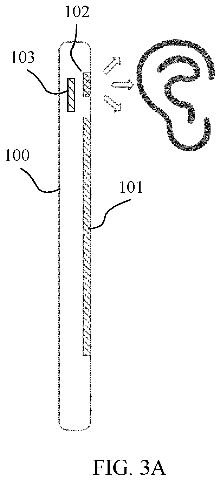

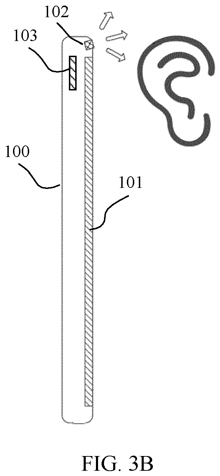

FIG. 2A is a schematic diagram in which a sound output hole 102 is located on a front side of a mobile terminal 100. FIG. 2B is a schematic diagram in which a location of the sound output hole 102 in FIG. 2A is changed. The mobile terminal 100 shown in FIG. 2A and FIG. 2B is used as an example. A size of the mobile terminal 100 is basically unchanged. However, because a size of a screen 101 increases from a size shown in FIG. 2A to a size shown in FIG. 2B, a non-screen region of the front side of the mobile terminal 100 becomes smaller, and a location of the sound output hole 102 moves from the front side of the mobile terminal 100 shown in FIG. 2A to a location near an edge shown in FIG. 2B. FIG. 3A is a cross-sectional view of the mobile terminal 100 in FIG. 2A. FIG. 3B is a cross-sectional view of the mobile terminal 100 in FIG. 2B. An arrow direction indicates a diffusion direction of sound in the sound output hole 102. As shown in FIG. 3A, when the sound output hole 102 is located on the front side of the mobile terminal 100, the location of the sound output hole is closer to a location of the ear when the user answers a call, and therefore more sound output from the sound output hole 102 can be heard by the user. However, when the sound output hole 102 is at the location near the edge, as shown in FIG. 3B, because the location of the sound output hole 102 deviates from the location of the ear of the user, a large amount of sound is leaked, causing a sound leakage problem.

### SUMMARY

This application provides a mobile terminal for preventing sound leakage and a sound output method for a mobile terminal, to resolve a sound leakage problem caused because a location of a sound output hole of the mobile terminal is close to a frame.

According to a first aspect, this application provides a mobile terminal for preventing sound leakage, including a first speaker component, a sound output hole, and a screen sound production component. The first speaker component is disposed at a location near a top frame of the mobile terminal. The sound output hole is disposed on the top frame of the mobile terminal. The screen sound production component is disposed on a back side of a screen of the mobile terminal, and the screen sound production component is located in an upper half of the screen.

The first speaker component includes at least two sound production states that are respectively as follows: a maximum volume output by the first speaker component is a first speaker volume, and the maximum volume output by the first speaker component is a second speaker volume, where the first speaker volume is less than the second speaker volume.

The screen sound production component includes at least two sound production states that are respectively as follows: a maximum volume output by the screen sound production component is a first sound production volume, and the maximum volume output by the screen sound production component is a second sound production volume, where the first sound production volume is greater than the second sound production volume.

The mobile terminal includes at least a first sound output mode and a second sound output mode, the first sound output mode is that the maximum volume output by the first speaker component is the first speaker volume and the maximum volume output by the screen sound production component is the first sound production volume, the second sound output mode is that the maximum volume output by the first speaker component is the second speaker volume and the maximum volume output by the screen sound production component is the second sound production volume, the first speaker volume is less than the first sound production volume, and the second speaker volume is greater than the second sound production volume.

The screen sound production component is disposed on the back side of the screen of the mobile terminal. Therefore, when a user has a high requirement for a sound receiving effect, a high requirement for confidentiality of sound content, or a high requirement for sound quality, the mobile terminal mainly depends on the screen sound production component to drive the screen to vibrate, so as to produce sound, that is, the mobile terminal uses a privacy mode. In the privacy mode, a location at which the screen produces sound is close to the ear of the user. Therefore, it can be ensured that the user directly receives a large amount of sound produced by the screen, instead of mainly receiving sound by using the sound output hole on the mobile terminal. In this way, the following case can be avoided: When imposing a requirement on sound, the user can receive sound only by using a conventional earpiece mode on the mobile terminal. Therefore, the following problem can also be avoided: A large amount of sound produced by the first speaker component in the earpiece mode is leaked when the sound is output from the sound output hole. The earpiece mode or a play mode is the second sound output mode, and the privacy mode is the first sound output mode.

According to a second aspect, this application further provides a sound output method for a mobile terminal, where the method may be applied to the mobile terminal according to the first aspect. In the method, it may be determined whether the mobile terminal meets a preset condition, and if the mobile terminal meets the preset condition, the mobile terminal is controlled to use a first sound output mode, that is, the mobile terminal enters a privacy mode.

It may be understood that the preset condition may be any one or more of a volume condition of ambient sound in an external environment in which the mobile terminal is located, a distance condition between the mobile terminal and a target object in an external environment, a use scenario condition of the mobile terminal, a screen pressure-bearing condition of the mobile terminal, and a distance condition between the mobile terminal and a user.

In a possible implementation, when it is determined whether a state of the mobile terminal meets the preset condition, the ambient sound in the external environment of the mobile terminal may be collected first. Then, it is determined whether a volume of the ambient sound is less than a first volume threshold. Finally, if the volume of the ambient sound is less than the first volume threshold, it is determined that the state of the mobile terminal meets the preset condition.

In a possible implementation, when it is determined whether a state of the mobile terminal meets the preset condition, whether a target object exists in a surrounding environment of the mobile terminal may be determined first. If the target object exists in the surrounding environment of the mobile terminal, a first distance between the target object and the mobile terminal is determined. Then, it continues to determine whether the first distance is less than or equal to a first distance threshold. If the first distance is less than or equal to the first distance threshold, it is determined that the state of the mobile terminal meets the preset condition.

In a possible implementation, when it is determined whether a state of the mobile terminal meets the preset condition, whether a current use scenario of the mobile terminal is a preset scenario may be determined first. If the use scenario is the preset scenario, it is determined that the state of the mobile terminal meets the preset condition.

In a possible implementation, when it is determined whether a state of the mobile terminal meets the preset condition, whether external pressure exerted on a screen of the mobile terminal is greater than or equal to a pressure threshold may be determined first. If the external pressure exerted on the screen is greater than or equal to the pressure threshold, it is determined that the state of the mobile terminal meets the preset condition.

In a possible implementation, when it is determined whether a state of the mobile terminal meets the preset condition, a second distance between the user and the mobile terminal may be determined first. Then, it is determined whether the second distance is less than or equal to a second distance threshold. Finally, if the second distance is less than or equal to the second distance threshold, it is determined that the state of the mobile terminal meets the preset condition.

In a possible implementation, the determining whether a state of the mobile terminal meets a preset condition further includes: determining whether the mobile terminal is currently on an incoming call, an outgoing call, or a voice call; and if the mobile terminal is on the incoming call, the outgoing call, or the voice call, determining that the current use scenario of the mobile terminal is the preset scenario, and further determining that the state of the mobile terminal meets the preset condition.

In a possible implementation, after the determining whether a state of the mobile terminal meets a preset condition, the method further includes: displaying a target mode option; and in response to an operation of selecting the target mode option by the user, controlling the mobile terminal to use the first sound output mode.

In a possible implementation, after the determining whether a state of the mobile terminal meets a preset condition, the method may further include: controlling a screen sound production component to output sound by using a first sound production volume, controlling a first speaker component to output sound by using a first speaker volume, controlling a second speaker component to output sound by using a third speaker volume, where the first sound production volume is separately greater than the first speaker volume and the third speaker volume.

It may be learned that, the mobile terminal for preventing sound leakage in this application may provide at least two sound output modes, namely, the earpiece mode and the privacy mode, for the user based on the first speaker component, the sound output hole, and the screen sound production component of the mobile terminal, and the mobile terminal may correspondingly switch the first speaker component or the screen sound production component in different modes.

In addition, the mobile terminal may further use the privacy mode based on the volume condition of the ambient sound in the external environment, the distance condition between the mobile terminal and the target object in the external environment, the use scenario condition of the mobile terminal, the screen pressure-bearing condition of the mobile terminal, the distance condition between the mobile terminal and the user, and the like, to mainly use the screen sound production component to drive the screen to vibrate, so as to produce sound, so that sound leaked from the sound output hole is reduced, and the sound receiving effect of the user is ensured.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show some embodiments of this application, and persons of ordinary skill in the art may still derive other drawings from these accompanying drawings without creative efforts.
FIG. 1 is a schematic diagram of a structure of a mobile terminal 100 according to an embodiment of this application;
FIG. 2A is a schematic diagram in which a sound output hole 102 is located on a front side of a mobile terminal 100;
FIG. 2B is a schematic diagram in which a location of the sound output hole 102 in FIG. 2A is changed;
FIG. 3A is a cross-sectional view of the mobile terminal 100 in FIG. 2A;
FIG. 3B is a cross-sectional view of the mobile terminal 100 in FIG. 2B;
FIG. 4A is a schematic diagram of a mobile terminal 100 with a screen sound production component 104 according to an embodiment of this application;
FIG. 4B is a cross-sectional view of the mobile terminal 100 in FIG. 4A according to an embodiment of this application;
FIG. 5 is another schematic diagram of a mobile terminal 100 with a screen sound production component 104 according to an embodiment of this application;
FIG. 6A is a schematic diagram of a mobile terminal 100 with a first speaker component 103 and a front-facing camera 105;
FIG. 6B is a schematic diagram of a screen sound production component 104 in the mobile terminal 100 in FIG. 6A;
FIG. 7 is a schematic diagram in which a sound output hole 102 is directly opposite to a first speaker component 103 according to an embodiment of this application;
FIG. 8 is a schematic diagram of a structure of a sound output hole 102 according to an embodiment of this application;
FIG. 9 is a schematic diagram of another structure of a sound output hole 102 according to an embodiment of this application;
FIG. 10A is a schematic diagram of an external structure of a mobile terminal 100 with an air exhaust hole 106;
FIG. 10B is a partial schematic diagram of an A-A cross-sectional view of the mobile terminal 100 in FIG. 9;
FIG. 11 is a cross-sectional view of a mobile terminal 100 with an air exhaust hole 106 and a screen sound production component 104 according to an embodiment of this application;
FIG. 12 is a cross-sectional view of a mobile terminal 100 with a speaker sound output hole 107 and a second speaker component 108 according to an embodiment of this application;
FIG. 13 is a schematic diagram of volumes generated by each sound production part of the mobile terminal 100 in FIG. 12 in different sound output modes;
FIG. 14A is a schematic diagram of a mobile terminal 100 provided with a curved surface screen;
FIG. 14B is a cross-sectional view of the mobile terminal 100 in FIG. 14A according to an embodiment of this application;
FIG. 15 is a schematic diagram of a mobile terminal 100 with a pressure sensor 109 according to an embodiment of this application;
FIG. 16 is a schematic diagram of a mobile terminal 100 with a distance sensor 140 according to an embodiment of this application;
FIG. 17 is a schematic diagram of a sound output method applied to a mobile terminal 100 for preventing sound leakage according to an embodiment of this application; and
FIG. 18 is a schematic diagram of a rear-facing camera 190 on a mobile terminal 100 according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of the embodiments of this application, unless otherwise stated, "a plurality of" means two or more than two.

A mobile terminal 100 in the embodiments of this application may be an electronic device that has a display function, for example, a mobile phone, a vehicle-mounted device (also referred to as an on-board unit), a tablet computer, a notebook computer, an ultra-mobile personal computer (ultra-mobile personal computer, UMPC), a handheld computer, a netbook, a personal digital assistant (personal digital assistant, PDA), a wearable electronic device, and a virtual reality device. This is not limited in the embodiments of this application.

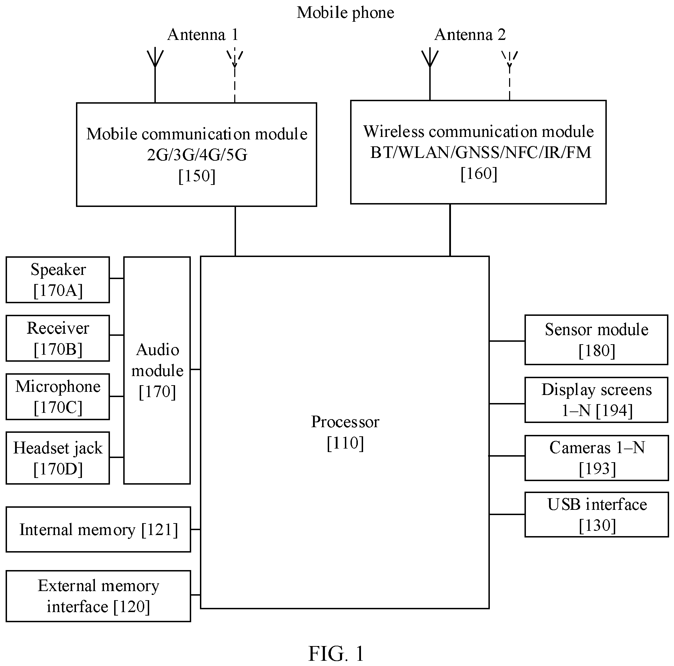

That the mobile phone is the foregoing mobile terminal 100 is used as an example. FIG. 1 is a schematic diagram of a structure of a mobile phone.

The mobile phone may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset interface 170D, a sensor module 180, and the like.

It may be understood that the structure illustrated in this embodiment of this application does not constitute a specific limitation on the mobile phone. In some other embodiments of this application, the mobile phone may include more or fewer components than those shown in the figure, or combine some components, or split some components, or have different component arrangements. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 110, and is configured to store instructions and data. In some embodiments, the memory in the processor 110 is a cache. The memory may store instructions or data that are or is just used or cyclically used by the processor 110. If the processor 110 needs to use the instructions or the data again, the processor 110 may directly invoke the instructions or the data from the memory, to avoid repeated access and reduce waiting time of the processor 110. This improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch. The mobile communication module 150 may provide a solution to wireless communication such as 2G/3G/4G/5G applied to the mobile phone. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a solution to wireless communication applied to the mobile phone, for example, a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, in the mobile phone, the antenna 1 is coupled to the mobile communication module 150, and the antenna 2 is coupled to the wireless communication module 160, so that the mobile phone can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The mobile phone implements a display function by using the GPU, the display screen 194, the application processor, and the like. The GPU is a microprocessor for image processing, and is connected to the display screen 194 and the application processor. The GPU is configured to perform mathematical and geometric calculation, and is configured to graphics rendering. The processor 110 may include one or more GPUs that execute program instructions to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a miniLED, a microLED, a micro-OLED, a quantum dot light emitting diode (quantum dot light emitting diode, QLED), and the like. In some embodiments, the mobile phone may include one or N display screens 194, and N is a positive integer greater than 1.

The mobile phone may implement a shooting function by using the ISP, the camera 193, the video codec, the GPU, the display screen 194, the application processor, and the like.

The ISP is configured to process data fed back by the camera 193. For example, during photo taking, a shutter is pressed, light is transmitted to a photosensitive element of the camera by using a lens, an optical signal is converted into an electrical signal, and the photosensitive element of the camera transmits the electrical signal to the ISP for processing, and converts the electrical signal into an image visible to the eyes. The ISP may further perform algorithm optimization on noise, brightness, and complexion. The ISP may further optimize parameters such as exposure and a color temperature of a shooting scene. In some embodiments, the ISP may be disposed in the camera 193.

The camera 193 is configured to capture a still image or a video. An optical image is generated for an object by using the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the mobile phone may include one or N cameras 193, and N is a positive integer greater than 1.

The digital signal processor is configured to process a digital signal, and may further process another digital signal in addition to a digital image signal. For example, when the mobile phone selects a frequency, the digital signal processor is configured to perform Fourier transformation and the like on frequency energy.

The video codec is configured to compress or decompress a digital video. The mobile phone may support one or more video codecs. In this way, the mobile phone may play or record videos in a plurality of encoding formats, for example, moving picture experts group (moving picture experts group, MPEG) 1, MPEG2, MPEG3, and MPEG4.

The external memory interface 120 may be configured to connect to an external storage card such as a microSD card, to expand a storage capability of the mobile phone. The external storage card communicates with the processor 110 by using the external memory interface 120, to implement a data storage function, for example, to store files such as music and a video into the external storage card.

The internal memory 121 may be configured to store computer executable program code, and the executable program code includes instructions. By running the instructions stored in the internal memory 121, the processor 110 performs various function applications and data processing of the mobile phone. The internal memory 121 may include a program storage region and a data storage region. The program storage region may store an operating system, an application program required by at least one function (such as a sound play function and an image display function), and the like. The data storage region may store data (such as audio data and an address book) created during use of the mobile phone, and the like. In addition, the internal memory 121 may include a high-speed random access memory, and may further include a non-volatile memory such as at least one magnetic disk memory, a flash memory, or a universal flash storage (universal flash storage, UFS).

The mobile phone may implement an audio function by using the audio module 170, the speaker 170A, the receiver 170B, the microphone 170C, the headset interface 170D, the application processor, and the like, for example, music play or recording.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The mobile phone may be used to listen to music or answer a hands-free call by using the speaker 170A.

The receiver 170B, also referred to as a "telephone receiver", is configured to convert an audio electrical signal into a sound signal. When the mobile phone is used to answer a call or receive voice information, the receiver 170B may be put close to the ear, to receive voice.

The microphone 170C, also referred to as "mic" or "mike", is configured to convert a sound signal into an electrical signal When making a call or sending voice information, a user may produce sound with the mouth approaching the microphone 170C, to input a sound signal to the microphone 170C. One or more microphones 170C may be disposed in the mobile phone. In some other embodiments, two microphones 170C may be disposed in the mobile phone, to implement a noise reduction function in addition to collecting a sound signal. In some other embodiments, three, four, or more microphones 170C may be alternatively disposed in the mobile phone, to recognize a sound source, implement a directional recording function, and the like in addition to collecting a sound signal and implementing noise reduction.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

Certainly, the mobile phone may further include a charging management module, a power management module, a power supply, a button, an indicator, one or more SIM card interfaces, and the like. This is not limited in this embodiment of this application.

The mobile terminal 100 in the embodiments of this application may be applied to various sound output scenarios, for example, a voice call, and audio and video content play. To facilitate the mobile terminal 100 to output sound, a sound output hole 102 may be generally disposed on the mobile terminal 100 to output sound produced by a first speaker component 103 inside the mobile terminal 100. The first speaker component 103 may be the receiver 170B shown in FIG. 1, or may be another component or structure that can convert an audio electrical signal into a sound signal. Currently, a habit that most users answer a call is as follows: When the user picks up the mobile terminal 100 near the ear, a center location at the top of the mobile terminal 100 is close to the ear. Therefore, based on the habit that most users answer a call, in some cases, for example, as shown in FIG. 2A and FIG. 2B, the first speaker component 103 and the sound output hole 102 may be further disposed at the center location at the top of the mobile terminal 100, so that a front-facing camera 105 in the mobile terminal 100 is disposed on the left or the right of the first speaker component 103. In this way, when the user picks up the mobile terminal 100 near the face or the head, the first speaker component 103 and the sound output hole 102 may be close to the ear of the user, and sound output by the mobile terminal 100 may be better received by the user.

There are two modes in which the mobile terminal 100 outputs sound by using the sound output hole 102: a low-volume earpiece mode and a high-volume play mode. A same sound production unit may be used inside the mobile terminal 100 to separately produce sound in the earpiece mode and the play mode, for example, the first speaker component 103 in FIG. 2A and FIG. 2B. In the earpiece mode, low-volume sound is produced by reducing a power of the first speaker component 103. In the play mode, high-volume sound is produced by increasing the power of the first speaker component 103.

In the earpiece mode, because a volume output by the sound output hole 102 is low, if the user wants to clearly hear sound content, the mobile terminal 100 needs to be close to the ear. A conventional mobile terminal 100 is shown in FIG. 2A. A screen 101 has a moderate size, and there is a specific distance between a top edge of the screen 101 and a top frame of the mobile terminal 100. A sound output hole 102 is disposed at a center location of the non-screen region. When a user picks up the mobile terminal 100 near the face, as shown in FIG. 3A, the sound output hole 102 may be exactly aligned with the ear of the user, and a large amount of sound output from the sound output hole 102 may be received by the user in an arrow direction in the figure. However, as a screen-to-body ratio of the mobile terminal 100 increases, as shown in FIG. 2B, the distance between the screen 101 and the top frame of the mobile terminal 100 becomes smaller, and the sound output hole 102 is also closer to the top frame or even disposed on the frame. Because a location of the sound output hole 102 is changed, a sound output location may deviate from a location of the ear of the user. As shown in FIG. 3B, the sound output hole 102 is close to the top frame or disposed on the frame. Partial output sound is leaked to an environment, to affect a receiving effect of the user.

To resolve the foregoing sound leakage problem of the mobile terminal 100 caused because the location of the sound output hole 102 is closed to the frame of the mobile terminal 100, an embodiment of this application provides a mobile terminal 100 for preventing sound leakage. With reference to the accompanying drawings, the following describes the mobile terminal 100 for preventing sound leakage provided in this embodiment of this application.

In this embodiment of this application, in addition to the foregoing conventional first speaker component 103, a screen sound production component 104 may be disposed inside the mobile terminal 100. The screen sound production component 104 is disposed on a back side of a screen 101, and is located in an upper half of the screen 101. In this way, during working, the screen sound production component 104 may drive the screen 101 to vibrate, so as to produce sound. The first speaker component 103 is disposed inside the mobile terminal 100 near a sound output hole 102, and sound produced during working is output though the sound output hole 102.

The screen sound production component 104 in this embodiment of this application may use a commonly used component that can generate controllable vibration, for example, a piezoelectric ceramic actuator and a voice coil actuator.

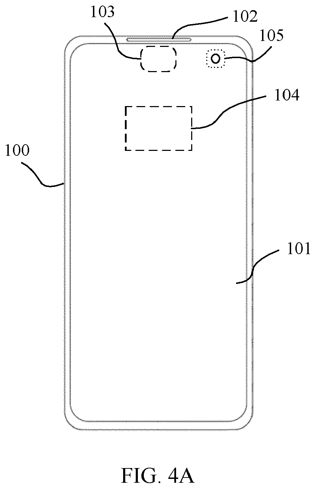

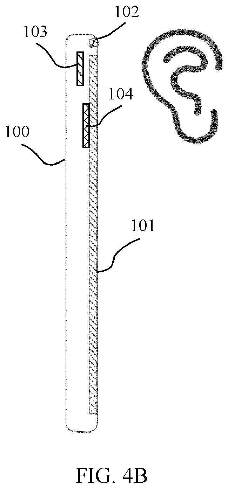

FIG. 4A is a schematic diagram of a mobile terminal 100 with a screen sound production component 104 according to an embodiment of this application. FIG. 4B is a cross-sectional view of the mobile terminal 100 in FIG. 4A according to an embodiment of this application. The screen sound production component 104 may be disposed in the upper half of the screen 101, for example, disposed at a location that is in a length direction of the screen 101 and that is 1/3 of a length away from a top frame of the mobile terminal 100. When a user picks up the mobile terminal 100 near the face or the head to receive sound, a location of the screen sound production component 104 is close to the ear of the user, so that a large amount of sound produced by the screen sound production component 104 by driving the screen 101 to vibrate is received by the user.

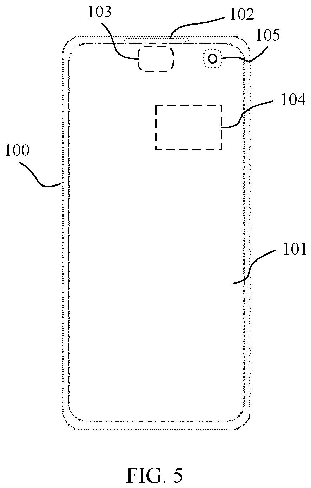

The screen sound production component 104 may be disposed at a center location of the screen 101, for example, a location of the screen sound production component 104 shown in FIG. 4A. Alternatively, the screen sound production component 104 may not be disposed at a center location, for example, a location of the screen sound production component 104 shown in FIG. 5. Regardless of a disposition manner, a location at which the screen 101 vibrates to produce sound is close to the ear of the user, so that most of sound is received by the user, and most of unreceived sound is shielded by the head of the user, to reduce sound leakage.

In some embodiments, if a sound receiving effect is considered, to prevent sound produced by the first speaker component 103 from being leaked to an environment through the sound output hole 102, sound may be produced only by using the screen sound production component 104 to drive the screen 101 to vibrate, instead of using the first speaker component 103. Therefore, regardless of a location at which the sound output hole 102 is disposed, a case in which sound output from the sound output hole 102 is leaked to the environment does not occur. In this case, the user receives only the sound produced through vibration of the screen 101, to ensure the sound receiving effect of the user.

When the sound receiving effect does not need to be considered, sound may be produced by using the first speaker component 103, and the produced sound can be output to the user through the sound output hole 102.

In some other embodiments, when the sound receiving effect does not need to be considered, the first speaker component 103 and the screen sound production component 104 may be used in combination. In other words, the user may receive sound output by the first speaker component 103 through the sound output hole 102, and may receive sound produced by the screen sound production component 104 by driving the screen 101 to vibrate.

In the foregoing embodiment, during working, the mobile terminal 100 with the first speaker component 103 and the screen sound production component 104 may provide three sound output modes for the user: a privacy mode, an earpiece mode, or a play mode.

In the privacy mode, it is required that a small amount of sound output by the mobile terminal 100 is leaked, but the sound can be clearly heard by the user. Therefore, the mobile terminal 100 may produce sound by using the screen sound production component 104 to drive the screen 101 to vibrate. Because a location at which the screen sound production component 104 is disposed is close to the ear of the user, a location at which the screen 101 produces sound is also close to the ear of the user, and a large amount of sound can be naturally received by the user. When only the screen sound production component 104 is used, sound does not need to be output from the sound output hole 102, so that a problem that partial sound is leaked because the location of the sound output hole 102 deviates from the ear of the user can be avoided.

In some embodiments in the privacy mode, in addition to working by using the screen sound production component 104, the mobile terminal 100 may enable the first speaker component 103 to work. However, it needs to be ensured that the screen sound production component 104 drives the screen 101 to mainly produce sound, and the first speaker component 103 assists in producing sound, that is, a maximum volume of sound produced by the first speaker component 103 is less than a volume of sound produced through vibration of the screen 101. In this case, the volume of the sound produced by the first speaker component 103 is low. Therefore, even if the sound is output from the sound output hole 102, sound content is difficult to be clearly heard by another person, to ensure that a problem that the sound content is leaked does not occur.

In the earpiece mode, the user still needs to pick up the mobile terminal 100 near the ear to answer a call, but high privacy or confidentiality is not required. Therefore, in this mode, only the first speaker component 103 produces sound, and the sound is output through the sound output hole 102 and received by the user.

In addition, in the earpiece mode, the sound output hole 102 is close to the top frame of the mobile terminal 100. This may cause a serious sound leakage problem. Consequently, the user cannot clearly hear partial sound content. Therefore, in some embodiments in the earpiece mode, the first speaker component 103 produces sound. In addition, the screen sound production component 104 may assist in producing sound. Because a location at which the screen sound production component 104 produces sound is close to the ear of the user, a sound leakage loss of the first speaker component 103 may be compensated for, to ensure the sound receiving effect of the user. In the play mode, sound output by the mobile terminal 100 needs to be sufficiently large, so that the user can clearly hear the sound without picking up the mobile terminal 100. Therefore, the mobile terminal 100 may produce sound only by using the first speaker component 103, adjust a power of the first speaker component 103 to increase a volume of the sound produced by the first speaker component 103, and finally output the produced sound to the user through the sound output hole 102.

In some embodiments in the play mode, in addition to working by using the first speaker component 103, the mobile terminal 100 may enable the screen sound production component 104 to work. However, because a volume of sound produced by the screen sound production component 104 by driving the screen 101 to vibrate is limited, and cannot meet a volume requirement in the play mode. Therefore, the first speaker component 103 may mainly produce sound, and the screen sound production component 104 may assist in producing sound.

In the foregoing embodiment, a front-facing camera 105 is generally disposed at a location on a front side of the mobile terminal 100 close to the top frame. The front-facing camera 105 may be located at a very center location close to the frame, or may be located at another location close to the frame. However, a camera component or the like is also disposed inside the mobile terminal, and space for placing the camera component or the like conflicts with space for placing the first speaker component 103 inside the mobile terminal 100. Therefore, to avoid the camera component or the like, a location of the first speaker component 103 needs to be adjusted based on a location of the camera component. However, because the location of the sound output hole 102 is not changed, the first speaker component 103 whose location is adjusted is not directly opposite to the sound output hole 102, and volumes of sound output on the left and the right of the sound output hole 102 are different.

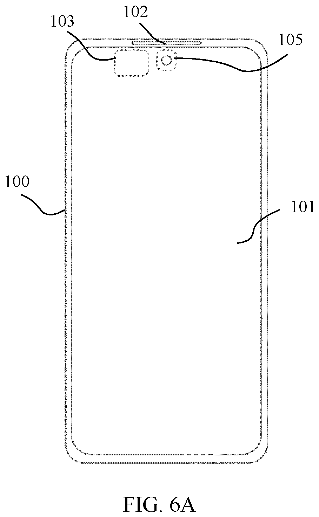

FIG. 6A is a schematic diagram of a mobile terminal 100 with a first speaker component 103 and a front-facing camera 105. If the front-facing camera 105 is disposed at a center location near the top frame of the mobile terminal 100, in the mobile terminal 100, the first speaker component 103 may be disposed on the left of the front-facing camera 105 to avoid the camera component or the like. In this case, if the sound output hole 102 is still disposed at the center location near the top frame, the left of the sound output hole 102 is closer to the first speaker component 103. Therefore, a volume of sound output on the left of the sound output hole 102 is greater than a volume of sound output on the right thereof.

When the mobile terminal 100 is in the play mode, because the user does not need to receive sound near the sound output hole 102, a case in which the volumes on the left and the right of the sound output hole 102 are inconsistent does not affect receiving of the sound by the user. However, when the mobile terminal 100 is in the conventional earpiece mode, because a volume of sound output from the sound output hole 102 is low, the ear of the user needs to be close to the sound output hole 102. In this case, the user may easily find that the volumes on the left and the right of the sound output hole 102 are inconsistent. In addition, because the location of the sound output hole 102 of the mobile terminal 100 increasingly deviates from the ear of the user, more sound is leaked. The two cases greatly affect the sound receiving effect of the user.

To resolve the foregoing problem that the volumes on the left and the right of the sound output hole 102 are inconsistent because the location of the first speaker component 103 deviates from the sound output hole 102, in the mobile terminal 100 in this embodiment of this application, a screen sound production component 104 may also be disposed on the back side of the screen 101 of the mobile terminal 100. When the user picks up the mobile terminal 100 near the face or the head to receive sound, the mobile terminal 100 may produce sound only by using the screen sound production component 104 to drive the screen 101 to vibrate, instead of using the first speaker component 103 and the sound output hole 102, to avoid the problem that the volumes on the left and the right of the sound output hole 102 are inconsistent and the sound is leaked.

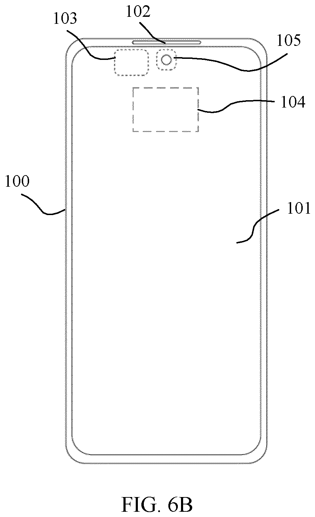

FIG. 6B is a schematic diagram of a screen sound production component 104 in the mobile terminal 100 shown in FIG. 6A. The screen sound production component 104 may be disposed at a center location in an upper part of the screen 101. When a user picks up the mobile terminal 100 near the face or the head to receive sound, the location of the screen sound production component 104 is close to the ear of the user, so that a large amount of sound produced by the screen sound production component 104 by driving the screen 101 to vibrate is received by the user, to ensure the sound receiving effect of the user.

In some embodiments, the mobile terminal 100 may produce sound by using the first speaker component 103 separately. If a volume output by the first speaker component 103 is high, the user can clearly hear sound content without enabling the mobile terminal 100 to be close to the face or the head, that is, the mobile terminal 100 is currently in the play mode. In this way, even if the volumes on the left and the right of the sound output hole 102 are inconsistent, the sound receiving effect of the user is not affected.

In some other embodiments, the mobile terminal 100 may use both the first speaker component 103 and the screen sound production component 104. When both the first speaker component 103 and the screen sound production component 104 work, the first speaker component 103 may mainly produce sound, and the screen sound production component 104 assists in producing sound. Alternatively, the first speaker component 103 may assist in producing sound, and the screen sound production component 104 mainly produces sound.

In the mobile terminal 100, when the first speaker component 103 mainly produces sound and the screen sound production component 104 assists in producing sound, the user mainly receives the sound produced by the first speaker component 103. If a volume output by the first speaker component 103 is sufficiently high, the user can hear clearly sound content without enabling the mobile terminal 100 to be close to the face or the head, that is, the mobile terminal 100 is in the play mode. In this way, even if the volumes on the left and the right of the sound output hole 102 are inconsistent, the sound receiving effect of the user is not affected.

In the mobile terminal 100, when the first speaker component 103 assists in producing sound and the screen sound production component 104 mainly produces sound, the user mainly receives the sound produced through vibration of the screen 101. Therefore, even if the volumes on the left and the right of the sound output hole 102 are inconsistent, the sound receiving effect of the user is not affected.

In the mobile terminal 100 in the foregoing embodiment, even if the screen sound production component 104 is disposed, in some cases, the user cannot receive, by using the sound output hole 102, the sound produced by the first speaker component 103. The user can receive the sound only by adjusting the volume of the first speaker component 103 to enable the mobile terminal 100 to be in the play mode, or the user mainly receives the sound produced through vibration of the screen 101. It may be learned that in the mobile terminal 100 in the foregoing embodiment, use of the first speaker component 103 is not flexible, and is limited.

To enable the first speaker component 103 in the mobile terminal 100 in the foregoing embodiment to be flexibly used, the location of the sound output hole 102 in this embodiment of this application may be specifically disposed based on the location of the first speaker component 103, that is, the sound output hole 102 is always opposite to the first speaker component 103. Therefore, it is ensured that the sound produced by the first speaker component 103 has a same volume on the left and the right of the sound output hole 102.

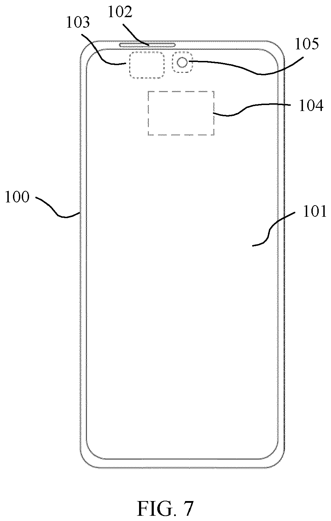

FIG. 7 is a schematic diagram in which a sound output hole 102 is directly opposite to a first speaker component 103 according to an embodiment of this application. In the mobile terminal 100, if the first speaker component 103 is disposed on the left of the front-facing camera 105 to avoid the front-facing camera 105, the sound output hole 102 may also be disposed at a left location on the top frame of the mobile terminal 100, and is directly opposite to the first speaker component 103. In this way, distances between the first speaker component 103 and both the left and the right of the sound output hole 102 are the same, so that the sound produced by the first speaker component 103 has a same volume on the left and the right of the sound output hole 102.

In the mobile terminal 100 in the foregoing embodiment, the problem that the volumes on the left and the right of the sound output hole 102 are inconsistent is avoided. Therefore, the mobile terminal 100 may still have the privacy mode, the earpiece mode, the play mode, and the like in the foregoing embodiment.

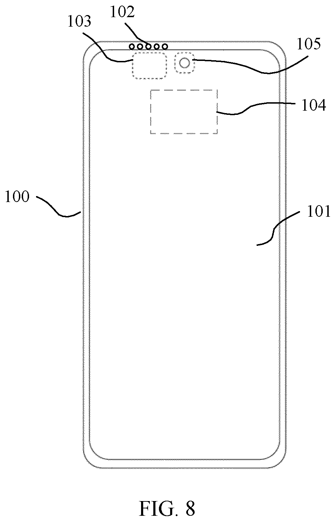

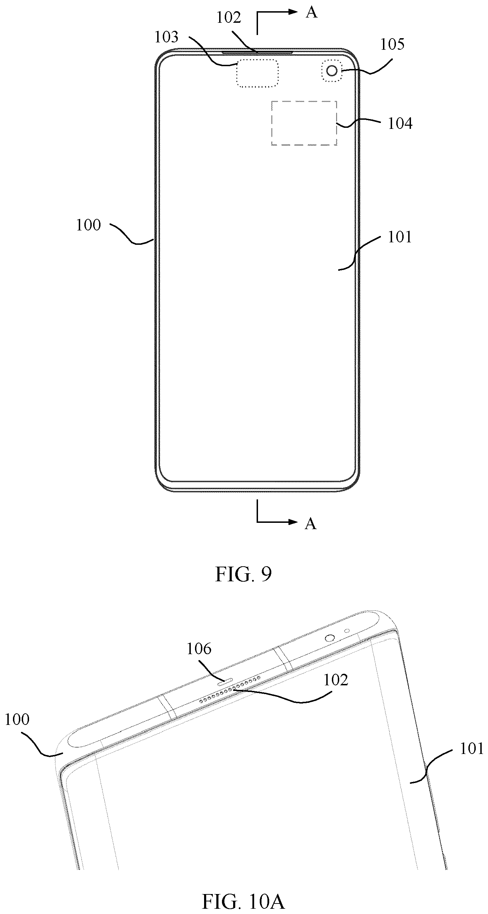

The sound output hole 102 in the foregoing embodiment is not limited to a single-hole structure shown in FIG. 7, and may be a multi-hole structure, for example, a sound output hole 102 shown in FIG. 8 that includes a plurality of circular holes. Alternatively, the sound output hole 102 may be another shape that has a hole and that can output sound, for example, a racetrack shape. Alternatively, the sound output hole 102 may be a seam structure. The seam structure may be a narrow seam whose length is greater than 15 mm and seam width is between 0.2 mm to 0.5 mm, for example, a sound output hole 102 that is shown in FIG. 9 and that uses a narrow seam structure. In the mobile terminal 100 in the foregoing embodiment, a sound output channel 1031 is disposed between the first speaker component 103 and the sound output hole 102. The sound produced by the first speaker component 103 may be transmitted to the sound output hole 102 through the sound output channel 1031, and is output by the sound output hole 102 to an external environment of the mobile terminal 100. However, due to limited internal space of the mobile terminal 100, a cross-sectional area of the sound output channel 1031 is set to be a small value. However, when the cross-sectional area of the sound output channel 1031 is small, an air flow in the sound output channel 1031 is large, causing noise in the transmitted sound.

To avoid the noise in the sound output from the sound output hole 102, an air exhaust hole 106 may be further disposed on the mobile terminal 100 in this embodiment of this application. The air exhaust hole 106 communicates with the sound output channel 1031, to increase a total sound output area, so as to balance the air flow in the sound output channel 1031.

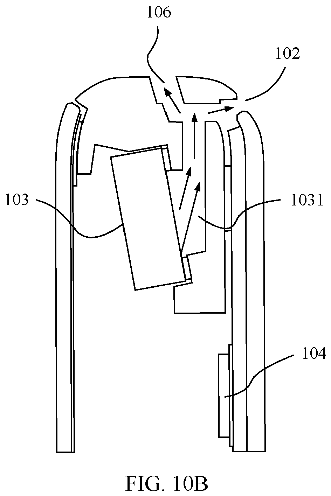

FIG. 10A is a schematic diagram of an external structure of a mobile terminal 100 with an air exhaust hole 106. FIG. 10B is a partial schematic diagram of an A-A cross-sectional view of the mobile terminal 100 in FIG. 9. The air exhaust hole 106 on the mobile terminal 100 may be disposed on the top frame. Because the air exhaust hole 106 communicates with the sound output channel 1031, a sound output channel may also be formed between the air exhaust hole 106 and the sound output channel 1031, so that a sound output channel is added based on the sound output channel 1031. The sound produced by the first speaker component 103 may be separately output to the external environment through the air exhaust hole 106 and the sound output hole 102. The two sound output channels increase the total sound output area to balance the air flow. A direction indicated by an arrow in FIG. 10B is a transmission direction of the sound produced by the first speaker component 103.

However, in the foregoing embodiment, although the air flow may be balanced by adding the air exhaust hole 106, the air exhaust hole 106 also leaks partial sound. Apparently, the partial sound is not received by the user in the conventional earpiece mode, and the sound output hole 102 also leaks partial sound. This also affects the sound receiving effect of the user.

To resolve a problem that sound is leaked in the mobile terminal 100 because the air exhaust hole 106 is added, in this embodiment of this application, similarly, a screen sound production component 104 may be disposed inside the mobile terminal 100, and the screen sound production component 104 is disposed on the back side of the screen 101. When the user has a high requirement for the sound receiving effect, the mobile terminal 100 produces sound only by using the screen sound production component 104 to drive the screen 101 to vibrate. A problem that sound is leaked through the sound output hole 102 and the air exhaust hole 106 does not occur if the first speaker component 103, the sound output hole 102, and the air exhaust hole 106 are not used, to ensure the sound receiving effect of the user.

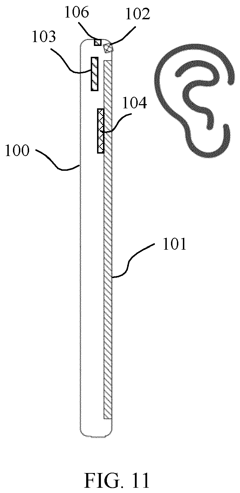

FIG. 11 shows a cross-sectional view of a mobile terminal 100 with an air exhaust hole 106 and a screen sound production component 104 according to an embodiment of this application. The screen sound production component 104 may be disposed at a center location in an upper part of the screen 101. When a user picks up the mobile terminal 100 near the face or the head to receive sound, a location of the screen sound production component 104 is close to the ear of the user, so that a large amount of sound produced by the screen sound production component 104 by driving the screen 101 to vibrate is received by the user. If the mobile terminal 100 does not use the first speaker component 103 to produce sound, a problem that both the air exhaust hole 106 and the sound output hole 102 leak sound does not occur.

In addition, the foregoing mobile terminal 100 with the air exhaust hole 106 and the screen sound production component 104 may still have the privacy mode, the earpiece mode, and the play mode in the foregoing embodiment.

In some cases, when the mobile terminal 100 in the foregoing embodiment is in the play mode, the user may require that the mobile terminal 100 can output stereo sound. However, because one first speaker component 103 and one sound output hole 102 are disposed only at the top of the mobile terminal 100 in the foregoing embodiment, the mobile terminal 100 is difficult to meet a stereo sound requirement.

To enable the mobile terminal 100 to output stereo sound, a speaker sound output hole 107 may be disposed at the bottom of the mobile terminal 100 in this embodiment of this application, and a second speaker component 108 is disposed at a location inside the mobile terminal 100 that is close to the speaker sound output hole 107.

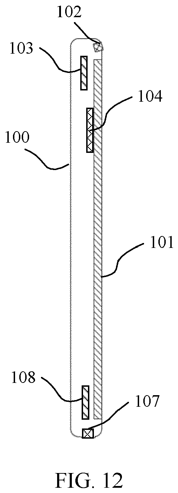

FIG. 12 is a cross-sectional view of a mobile terminal 100 with a speaker sound output hole 107 and a second speaker component 108 according to an embodiment of this application. When the mobile terminal 100 is in the play mode, sound of the first speaker component 103 is output by using the sound output hole 102, and sound of the second speaker component 108 is output by using the speaker sound output hole 107, so that a stereo sound play requirement of the mobile terminal 100 can be met. The second speaker component 108 may be the speaker 170A shown in FIG. 1, or may be another component or structure that can convert an audio electrical signal into a sound signal.

The foregoing mobile terminal 100 with the speaker sound output hole 107 and the second speaker component 108 also has the privacy mode, the earpiece mode, and the play mode.

In the foregoing embodiment, when the mobile terminal 100 is in different sound output modes, volumes generated at each of the first speaker component 103, the screen sound production component 104, and the second speaker component 108 are different.

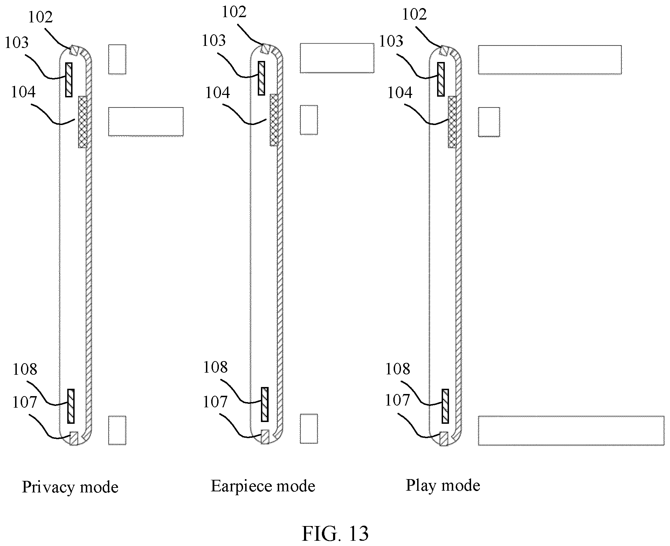

FIG. 13 is a schematic diagram of volumes produced by each sound production part of the mobile terminal 100 in FIG. 12 in different sound output modes. A horizontal length of a rectangular box corresponding to each sound production part on the right of the mobile terminal 100 is used to indicate a generated volume.

As shown in FIG. 13, when the mobile terminal 100 is in the play mode, the second speaker component 108 may be mainly used to produce sound, a volume is high, and sound is output through the speaker sound output hole 107. In addition, the first speaker component 103 and the screen sound production component 104 may also assist in producing sound, to increase a volume of sound played by the mobile terminal 100. In this case, both a maximum volume output by the first speaker component 103 and a maximum volume output by the screen sound production component 104 are less than a volume output by the second speaker component 108.

In some embodiments in which the mobile terminal 100 is in the play mode, the mobile terminal 100 may also produce sound only by using the second speaker component 108. Alternatively, when the second speaker component 108 is mainly used to produce sound, the first speaker component 103 may be used to assist in producing sound. Alternatively, when the second speaker component 108 is mainly used to produce sound, the screen sound production component 104 may be used to drive the screen 101 to vibrate, so as to assist in producing sound.

In some embodiments in which the mobile terminal 100 is in the play mode, the mobile terminal 100 may mainly produce sound by using the first speaker component 103, a volume is high, and sound is output through the sound output hole 102. In addition, the second speaker component 108 and the screen sound production component 104 may also assist in producing sound, to increase a volume of sound played by the mobile terminal 100. In this case, both a maximum volume output by the second speaker component 108 and a maximum volume output by the screen sound production component 104 are less than a volume output by the first speaker component 103.

In some other embodiments in which the mobile terminal 100 is in the play mode, the mobile terminal 100 may also produce sound only by using the first speaker component 103 to. Alternatively, when the first speaker component 103 is mainly used to produce sound, the second speaker component 108 may be used to assist in producing sound. Alternatively, when the first speaker component 103 is mainly used to produce sound, the screen sound production component 104 may be used to drive the screen 101 to vibrate, so as to assist in producing sound.

As shown in FIG. 13, when the mobile terminal 100 is in the privacy mode, the screen sound production component 104 may be mainly used to drive the screen 101 to vibrate, so as to produce sound. In addition, the first speaker component 103 and the second speaker component 108 may also assist in producing sound. However, to avoid excessive sound leakage in the privacy mode, both a maximum volume output by the first speaker component 103 and a maximum volume output by the second speaker component 108 are less than a volume generated through vibration of the screen 101.

In some embodiments in which the mobile terminal 100 is in the privacy mode, the mobile terminal 100 may also produce sound only by using the screen sound production component 104 to drive the screen 101 to vibrate. Alternatively, when the screen sound production component 104 is mainly used to drive the screen 101 to vibrate, so as to produce sound, the first speaker component 103 may be used to assist in producing sound. Alternatively, when the screen sound production component 104 is mainly used to drive the screen 101 to vibrate, so as to produce sound, the second speaker component 108 may be used to assist in producing sound.

As shown in FIG. 13, when the mobile terminal 100 is in the earpiece mode, the first speaker component 103 may be mainly used to produce sound. In addition, the screen sound production component 104 and the second speaker component 108 may assist in producing sound. However, to prevent more sound in the earpiece mode from being leaked, both a maximum volume produced by the screen sound production component 104 by driving the screen 101 to vibrate and a maximum volume output by the second speaker component 108 are less than a volume of sound output by the first speaker component 103.

In some embodiments in which the mobile terminal 100 is in the earpiece mode, the mobile terminal 100 may also produce sound only by using the first speaker component 103. Alternatively, when the first speaker component 103 is mainly used to produce sound, the screen sound production component 104 may be used to drive the screen 101 to vibrate, so as to assist in producing sound. Alternatively, when the first speaker component 103 is mainly used to produce sound, the second speaker component 108 may be used to assist in producing sound.

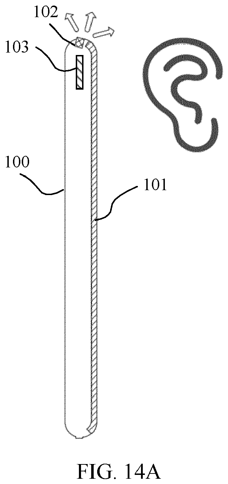

For a structure of the mobile terminal 100 in any one of the foregoing embodiments, refer to FIG. 4A and FIG. 4B. The screen 101 of the mobile terminal 100 is a flat screen. In addition, specific space is reserved between the screen 101 and an upper frame of the mobile terminal 100, and the sound output hole 102 may be exactly disposed in the space. However, currently, the user imposes an increasingly high requirement on a size of the screen 101. To increase the size of the screen 101, the top of increasingly more screens 101 is designed as a curved surface screen, for example, a mobile terminal 100 that is shown in FIG. 14A and on which a top curved surface screen is disposed.

In the mobile terminal 100 in which a curved surface screen is disposed at the top, because the size of the screen 101 increases, the top of the screen 101 occupies a location of a partial top frame of the mobile terminal 100. Therefore, the sound output hole 102 can only be moved upward based on an original location, and finally may be disposed at a location that greatly deviates from the ear of the user. For example, the location of the sound output hole 102 shown in FIG. 14A is farther away from the ear of the user than the location of the sound output hole 102 in FIG. 4B. When the user picks up the mobile terminal 100 near the ear to listen to low-volume sound, more sound output through the sound output hole 102 is leaked to the environment, and it is more difficult for the user to clearly hear sound content.

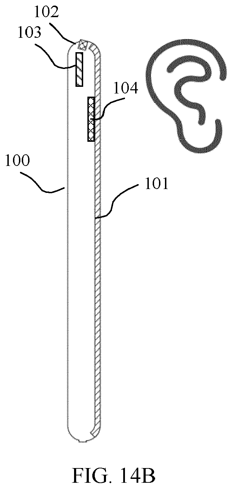

In this embodiment of this application, for the mobile terminal 100 on which a top curved surface screen is disposed, a screen sound production component 104 may be still disposed on the back side of the screen 101. For details, refer to a schematic diagram of another structure of a mobile terminal 100 shown in FIG. 14B. As shown in FIG. 14B, sound produced by the first speaker component 103 is output through the sound output hole 102, and the screen sound production component 104 may also drive the screen 101 to vibrate, so as to produce sound. Because a location at which the screen sound production component 104 produces sound is close to the ear of the user, when the user imposes a high requirement on the sound receiving effect, the mobile terminal 100 may produce sound only by using the screen sound production component 104 to drive the screen 101. Similarly, in this case, the first speaker component 103 does not produce sound, and the sound output hole 102 does not output sound. Therefore, even if the location of the sound output hole 102 greatly deviates from the ear of the user, that the user listens to sound produced through vibration of the screen 101 is not affected, and the sound leakage problem can be avoided.

In addition, the foregoing mobile terminal 100 that has the screen sound production component 104 and that is provided with a curved surface screen may also have the privacy mode, the earpiece mode, the play mode, and the like. For a specific implementation, refer to the content in the foregoing embodiment.

It should be noted that, the top and the bottom of the mobile terminal 100 in this embodiment of this application respectively refer to a topmost part and a bottommost part in a length direction of the mobile terminal 100 during normal use, for example, a topmost part and a bottommost part of the mobile terminal 100 shown in FIG. 4B in a current vertical state.

The front side and the back side of the mobile terminal 100 respectively refer to a direction in which the mobile terminal 100 is directly opposite to the user and a direction in which the mobile terminal 100 is far away from the user during normal use, for example, in a current vertical state, a direction in which the mobile terminal 100 shown in FIG. 4B is close to the ear of the user and a direction in which the mobile terminal 100 shown in FIG. 4B is far away from the ear of the user. A camera disposed on the front side of the mobile terminal 100 is referred to as a front-facing camera, and a camera disposed on the back side of the mobile terminal 100 is referred to as a rear-facing camera.

The upper half of the mobile terminal 100 is an upper half in a length direction of the mobile terminal 100 during normal use, for example, an upper half of the mobile terminal 100 shown in FIG. 4B in a current vertical state.

The back side of the screen 101 refers to a direction in which the screen 101 is far away from the user during normal use, for example, a direction in which the screen 101 shown in FIG. 4B is far away from the ear of the user.

The upper half of the screen 101 is an upper half in a length direction of the screen 101 during normal use, for example, an upper half of the screen 101 when the mobile terminal 100 shown in FIG. 4B is in a current vertical state.

The top of the screen 101 refers to a part of the screen 101 that is close to the top of the mobile terminal 100.

In the mobile terminal 101, a speaker component disposed near the top frame is the first speaker component 103, and a speaker component disposed near the bottom frame is the second speaker component 108.

In the mobile terminal 100 in the foregoing embodiment, when the screen sound production component 104 uses a piezoelectric ceramic actuator, pressure between the ear of the user and the screen 101 increases, and sound transmitted to the user through bone conduction when the screen 101 vibrates also increases. Then, based on a volume requirement of the user, the user may apply pressure or decrease pressure on the screen 101 by using the ear, to adjust a volume.

A pressure sensor 109 may be disposed inside the mobile terminal 100 in any one of the foregoing embodiments. The pressure sensor 109 is located in the upper half of the mobile terminal 100, and is configured to detect pressure exerted by the user on the screen 101 of the mobile terminal 100. When pressure is exerted on the screen 101, the mobile terminal 100 may automatically switch a currently used sound output mode to a target sound output mode, for example, switch the earpiece mode to the privacy mode.

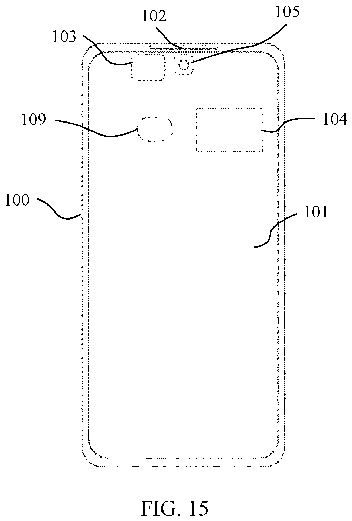

FIG. 15 is a schematic diagram of a mobile terminal 100 with a pressure sensor 109 according to an embodiment of this application. The pressure sensor 109 may be generally disposed in the upper half of the mobile terminal 100, for example, disposed at a location that is in a length direction of the mobile phone 100 and that is 1/3 of a length away from the top frame, to accurately perceive pressure exerted by the user on the screen 101.

A distance sensor 140 may be disposed inside the mobile terminal 100 in any one of the foregoing embodiments. The distance sensor 140 is located in the upper half of the mobile terminal 100, and is configured to detect whether the user is close to the mobile terminal 100. When the user is close to the mobile terminal 100, the mobile terminal 100 may automatically switch a currently used sound output mode to a target sound output mode, for example, switch the earpiece mode to the privacy mode.

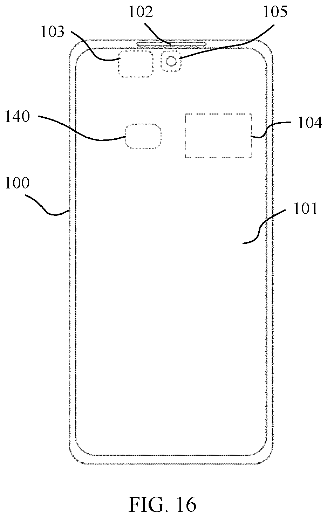

FIG. 16 is a schematic diagram of a mobile terminal 100 with a distance sensor 140 according to an embodiment of this application. The distance sensor 140 may also be disposed in the upper half of the mobile terminal 100, for example, disposed at a location that is in a length direction of the mobile phone 100 and that is 1/3 of a length away from the top frame, to accurately perceive whether the user is close to the mobile terminal 100.

The pressure sensor 109 and the distance sensor 140 in this embodiment of this application may be further disposed in the sensor module 180 shown in FIG. 1. In addition, the distance sensor 140 may be a component that can measure a distance between the user and the mobile terminal 100, for example, an optical proximity sensor, a screen capacitive sensor, and an ultrasonic sensor. For ease of describing the step in which the screen sound production component 104 drives the screen 101 to vibrate, so as to produce sound, in this embodiment of this application, the sound produced by the screen sound production component 104 by driving the screen 101 to vibrate may be referred to as sound output by the screen sound production component 104, that is, content in the two descriptions is the same.

It may be learned from the foregoing content that, compared with some current mobile terminals 100, the mobile terminal 100 in this embodiment of this application may provide a new privacy mode. When a volume of sound output in the earpiece mode or the play mode cannot meet a privacy requirement of the user, the mobile terminal 100 may actively switch the earpiece mode or the play mode to the privacy mode. Therefore, the sound leakage problem caused because the location of the sound output hole 102 of the mobile terminal 100 is close to the frame in the earpiece mode may be avoided.

To avoid the foregoing sound leakage problem, based on the structure of the foregoing mobile terminal 100 for preventing sound leakage and the provided sound output mode, an embodiment of this application further provides a sound output method that can be applied to the mobile terminal 100, to control the mobile terminal 100 to switch different sound output modes, and control the first speaker component and the screen sound production component to output different volumes.

In the method, regardless of whether the mobile terminal 100 is currently in the earpiece mode or the play mode, when a state of the mobile terminal 100 meets a preset condition, the current earpiece mode or play mode may be switched to the privacy mode.

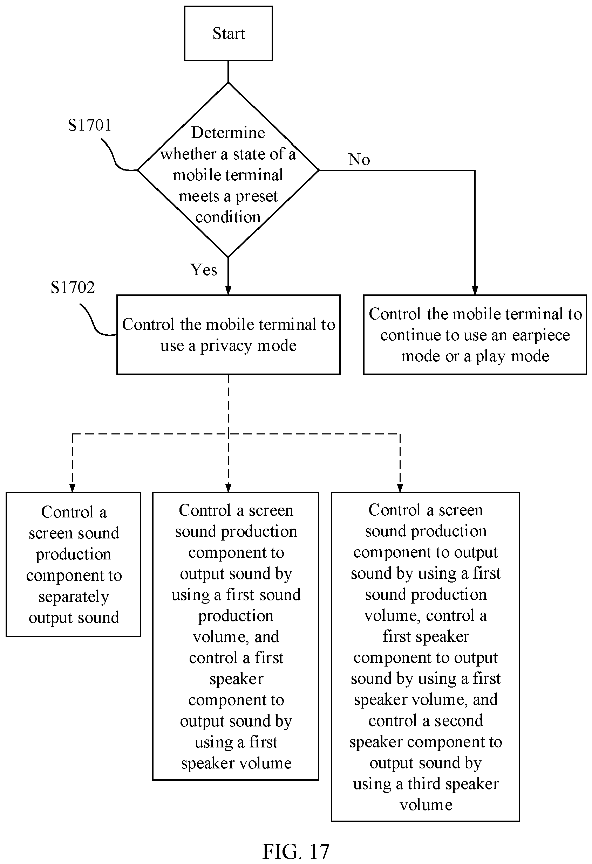

FIG. 17 is a schematic diagram of a sound output method applied to a mobile terminal 100 for preventing sound leakage according to an embodiment of this application. In step S 1701, it is first determined whether a state of the mobile terminal 100 meets a preset condition. In step S 1702, if the state of the mobile terminal 100 meets the preset condition, the mobile terminal 100 is controlled to use a privacy mode.

The preset condition is used to represent a privacy requirement condition of a user, and may specifically include a volume condition of ambient sound in an external environment in which the mobile terminal 100 is located, a distance condition between the mobile terminal 100 and a target object in an external environment, a use scenario condition of the mobile terminal 100, a screen pressure-bearing condition of the mobile terminal 100, a distance condition between the mobile terminal 100 and a user, and the like. When the state of the mobile terminal 100 meets any one or more of the preset conditions, the mobile terminal 100 may perform mode switching.

In the external environment, there may be a person other than the user, and there may be a device, an object, and the like other than the mobile terminal 100. The ambient sound is ambient sound produced by the person, the object, the device, and the like other than the user and the mobile terminal 100 in the external environment. If a volume of the ambient sound is excessively low, it indicates that a surrounding environment is quiet, and sound output by the mobile terminal 100 in the earpiece mode or the play mode is easily received by a person or a radio device at a short distance. In this case, the user has a risk of disclosing privacy. Therefore, in step S1701, the ambient sound in the external environment of the mobile terminal 100 may be collected first. Then, it is determined whether a volume of the ambient sound is less than a first volume threshold. If the volume of the ambient sound is less than the first volume threshold, it indicates that the surrounding environment is quiet. In this case, it is determined that the state of the mobile terminal 100 meets the preset condition. In other words, the surrounding environment is quiet, and the earpiece mode or the play mode needs to be switched to the privacy mode.

In this embodiment of this application, the sound in the environment may be collected by using a microphone 170C inside the mobile terminal 100, to determine the volume of the sound in the environment. That the first volume threshold is 50 is used as an example. When the volume of the ambient sound detected by the microphone 170C is less than 50, the earpiece mode or the play mode needs to be switched to the privacy mode. When the volume of the ambient sound is greater than or equal to 50, the earpiece mode or the play mode may continue to be used.

In this embodiment of this application, the target object may be a person, or may be a device with an audio collection function, for example, another mobile terminal, a microphone, and a surveillance camera. If a target object exists in a surrounding environment, and the target object is close to the mobile terminal 100, sound output by the mobile terminal 100 in the earpiece mode or the play mode is also easily received by the target object. In this case, the user also has a risk of disclosing privacy. Therefore, in step S1701, whether a target object exists in the surrounding environment of the mobile terminal 100 may be determined first. If the target object exists, a first distance between the target object and the mobile terminal is further determined. Then, it is determined whether the first distance is less than or equal to a first distance threshold. If the first distance is less than or equal to the first distance threshold, it indicates that the target object is close to the mobile terminal 100. In this case, it is determined that the state of the mobile terminal 100 meets the preset condition. In other words, a target object close to the mobile terminal 100 exists in the surrounding environment, and the earpiece mode or the play mode needs to be switched to the privacy mode.

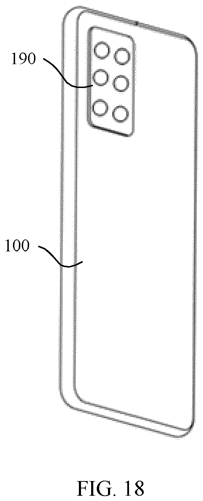

In this embodiment of this application, a preview image of the surrounding environment of the mobile terminal 100 may be obtained by using a rear-facing camera 190 disposed on a backplane of the mobile terminal 100. FIG. 18 is a schematic diagram of a rear-facing camera 190 on a mobile terminal 100 according to an embodiment of this application. Then, whether a target object exists in the preview image is determined. That the first distance threshold is 1 meter is used as an example. When the first distance between the target object and the mobile terminal 100 is less than or equal to 1 meter, the earpiece mode or the play mode needs to be switched to the privacy mode. When the first distance between the target object and the mobile terminal 100 is greater than 1 meter, the earpiece mode or the play mode may continue to be used.

A use scenario of the mobile terminal 100 includes an incoming call scenario, an outgoing call scenario, a voice call scenario, a video call scenario, a video play scenario, and the like. To ensure that the sound output mode can be accurately switched in different use scenarios, a scenario in which the sound output mode can be switched to the privacy mode may be set as a preset scenario in advance. For example, in the call scenario and the voice call scenario, the user generally picks up the mobile terminal 100 near the head or the ear to answer a call. Therefore, to avoid sound leakage in the voice call scenario, the sound output mode in the call scenario and the voice call scenario may be determined as the privacy mode. In this case, the call scenario and the voice call scenario are preset scenarios. In step S1701, whether a current use scenario of the mobile terminal 100 is a preset scenario may be determined first. If the current use scenario of the mobile terminal 100 is the preset scenario, it may be determined that the state of the mobile terminal 100 meets the preset condition. In other words, the earpiece mode or the play mode may be switched to the privacy mode.

In this embodiment of this application, before the current use scenario of the mobile terminal 100 is determined, the current use scenario further needs to be obtained. When the current use scenario is obtained, the use scenario may be detected based on a current running parameter and the like of the mobile terminal 100.

In this embodiment of this application, to avoid excessive leakage of sound output by the mobile terminal 100 in the earpiece mode or the play mode, in step S1701, whether external pressure exerted on a screen 101 of the mobile terminal 100 is greater than or equal to a pressure threshold may be determined first. Generally, the external pressure is mostly caused due to extrusion of the face or the head of the user on the screen 101. If the external pressure exerted on the screen 101 is greater than or equal to the pressure threshold, it indicates that the user may pick up the mobile terminal 100 against the head or the ear. In this case, it may be determined that the state of the mobile terminal 100 meets the preset condition. In other words, the earpiece mode or the play mode may be switched to the privacy mode.

In step S1701, a pressure sensor 109 inside the mobile terminal 100 may be controlled to detect the pressure on the screen. If the screen 101 is under external pressure and the pressure is greater than or equal to the pressure threshold, to avoid excessive leakage of output sound, the earpiece mode or the play mode needs to be switched to the privacy mode. If the screen 101 is not under external pressure or the pressure is less than the pressure threshold, the earpiece mode or the play mode may continue to be used.

In this embodiment of this application, to avoid excessive leakage of the sound output by the mobile terminal 100 in the earpiece mode, in step S1701, a second distance between the user and the mobile terminal 100 may be determined first. Then, it is determined whether the second distance is less than or equal to a second distance threshold. If the second distance is less than or equal to the second distance threshold, it indicates that the user is close to the mobile terminal 100, and it is determined that the state of the mobile terminal 100 meets the preset condition. In other words, the earpiece mode or the play mode needs to be switched to the privacy mode.

In step S1701, a distance sensor 140 inside the mobile terminal 100 may be controlled to detect the second distance between the user and the mobile terminal 100. That the second distance is 0.02 meter is used as an example. When the second distance between the user and the mobile terminal 100 is less than or equal to 0.02 meter, it indicates that the user is close to the mobile terminal 100. In this case, the earpiece mode or the play mode may be switched to the privacy mode. When the second distance between the user and the mobile terminal 100 is greater than 0.02 meter, it indicates that the user is far away from the mobile terminal 100. In this case, the earpiece mode or the play mode may continue to be used.

It should be noted that in this embodiment of this application, that the user is close to the mobile terminal 100 generally means that the head or the ear of the user is close to the mobile terminal 100. Therefore, in step S 1701, a distance between the head of the user and the mobile terminal 100 may be specifically detected.

In the foregoing embodiment, in the privacy mode, the screen sound production component 104 may separately output sound. In addition, the screen sound production component 104 may be further used with the first speaker component 103 to jointly output sound. Therefore, in step S1702, a maximum volume of the screen sound production component 104 may be further controlled to be a first sound production volume, and a maximum volume output by the first speaker component 103 may be further controlled to be a first speaker volume. The first speaker volume is less than the first sound production volume, to ensure that the screen sound production component 104 is used as a main sound output component and the first speaker component 103 is used as an auxiliary sound output component in the privacy mode. In addition, a problem that user privacy is disclosed because sound output by the first speaker component 103 is excessively large is avoided.

In the foregoing embodiment, in the privacy mode, the screen sound production component 104 may be further used with the first speaker component 103 and the second speaker component 108 to jointly output sound. Therefore, in step S 1702, the screen sound production component 104 may be further controlled to output sound by using a first sound production volume, the first speaker component 103 may be further controlled to output sound by using a first speaker volume, and the second sound production component 108 may be further controlled to output sound by using a third speaker volume. The first sound production volume is separately greater than the first speaker volume and the third speaker volume, to ensure that the screen sound production component 104 is used as a main sound output component and both the first speaker component 103 and the second speaker component 108 are used as auxiliary sound output components in the privacy mode. In addition, a problem that user privacy is disclosed because sound output by the first speaker component 103 and the second speaker component 108 is excessively large is avoided.

In the foregoing embodiment, in the earpiece mode, the first speaker component 103 may separately output sound, or may be used with the screen sound production component 104 to jointly output sound. Therefore, the first speaker component 103 may be further controlled to output sound by using a second speaker volume, and the screen sound production component 104 may be further controlled to output sound by using a second sound production volume. The second speaker volume is greater than the second sound production volume, to ensure that the first speaker component 103 is used as a main sound output component and the screen sound production component 104 is used as an auxiliary sound output component in the earpiece mode. In addition, sound output by the screen sound production component 104 is prevented from being excessively large to interfere with sound output in the earpiece mode.

In the foregoing embodiment, in the earpiece mode, the first speaker component 103 may be used with the screen sound production component 104 and the second speaker component 108 to jointly output sound. Therefore, the first speaker component 103 may be further controlled to output sound by using a second speaker volume, the screen sound production component 104 may be further controlled to output sound by using a second sound production volume, and the second speaker component 108 may be further controlled to output sound by using a fourth speaker volume. The second speaker volume is separately greater than the second sound production volume and the fourth speaker volume, to ensure that the first speaker component 103 is used as a main sound output component and both the screen sound production component 104 and the second speaker component 108 are used as auxiliary sound output components in the earpiece mode. In addition, sound output by the screen sound production component 104 and the second speaker component 108 is prevented from being excessively large to interfere with sound output in the earpiece mode.

In the foregoing embodiment, in the play mode, sound may be produced only by using the first speaker component 103. Therefore, the first speaker component 103 may be further controlled to output sound by using a fifth speaker volume. The fifth speaker volume is greater than the second speaker volume, to ensure that a volume of sound output by the first speaker component 103 in the play mode is greater than a volume of sound output by the first speaker component 103 in the earpiece mode. In addition, it is ensured that the volume of the sound output by the first speaker component 103 meets a sound play requirement.

In the foregoing embodiment, in the play mode, the first speaker component 103 may be further used with the screen sound production component 104 to jointly output sound. Therefore, the first speaker component 103 may be further controlled to output sound by using a fifth speaker volume, and the screen sound production component 104 may be further controlled to output sound by using a third sound production volume. The fifth speaker volume is separately greater than the second speaker volume and the third sound production volume, to ensure that the first speaker component 103 is used as a main sound output component and the screen sound production component 104 is used as an auxiliary sound output component in the play mode. In addition, it is ensured that a volume of sound output by the first speaker component 103 meets a sound play requirement, and sound output by the screen sound production component 104 may increase an overall output volume in the play mode.

In the foregoing embodiment, in the play mode, the first speaker component 103 may be further used with the screen sound production component 104 and the second speaker component 108 to jointly output sound. Therefore, the first speaker component 103 may be further controlled to output sound by using a fifth speaker volume, the screen sound production component 104 may be further controlled to output sound by using a third sound production volume, and the second speaker component 108 may be further controlled to output sound by using a sixth speaker volume. The fifth speaker volume is separately greater than the second speaker volume, the third sound production volume, and the sixth speaker volume, to ensure that the first speaker component 103 is used as a main sound output component and both the second speaker component 108 and the screen sound production component 104 are used as auxiliary sound output components in the play mode. In addition, it is ensured that a volume of sound output by the first speaker component 103 meets a sound play requirement, and sound output by the second speaker component 108 and the screen sound production component 104 may increase an overall output volume in the play mode. In addition, it may be learned from the foregoing content that, when the mobile terminal 100 with the second speaker component 108 is in the play mode, the second speaker component 108 may be separately controlled to output sound. Alternatively, the second speaker component 108 is controlled to output sound, and the screen sound production component 104 is controlled to output sound. A volume of the sound output by the second speaker component 108 is greater than a volume of the sound output by the screen sound production component 104, to ensure that the volume of the sound of the second speaker component 108 meets a sound play requirement. Alternatively, the second speaker component 108 is controlled to output sound, and the first speaker component 103 is controlled to output sound. A volume of the sound output by the second speaker component 108 is greater than a volume of the sound output by the first speaker component 103, to ensure that the volume of the sound of the second speaker component 108 meets a sound play requirement.

When the mobile terminal 100 with the second speaker component 108 is in the play mode, the second speaker component 108, the first speaker component 103, and the screen sound production component 104 may be controlled to jointly output sound, so that a volume of the sound output by the second speaker component 108 is greater than a volume of the sound output by the first speaker component 103 and a volume of the sound output by the screen sound production component 104, to ensure that the volume of the sound of the second speaker component 108 meets a sound play requirement.

It may be learned from the foregoing content that, when the mobile terminal 100 with the second speaker component 108 is in the privacy mode, the screen sound production component 104 and the second speaker component 103 may be controlled to jointly output sound. A volume of the sound output by the second speaker component 103 is less than a volume of the sound output by the screen sound production component 104, to ensure that the screen sound production component 104 is used as a main sound output component and the second speaker component 108 is used as an auxiliary sound output component in the privacy mode. In addition, a problem that user privacy is disclosed because the sound output by the second speaker component 108 is excessively large is avoided.

In some embodiments, when the mobile terminal 100 is in the earpiece mode, the user may not pick up the mobile terminal 100 near the face or the head. In this case, the mobile terminal 100 may also obtain the preview image of the surrounding environment by using the front-facing camera 105. Then, the mobile terminal 100 determines whether a target object exists in the preview image.

In some embodiments, the mobile terminal 100 may obtain the preview image of the surrounding environment separately by using the front-facing camera 105 and the rear-facing camera 190. Then, the mobile terminal 100 determines whether a target object exists in all preview images.

In some embodiments, in addition to the front-facing camera 105 and the rear-facing camera 190, the mobile terminal 100 may further use another device that can capture the target object, for example, Lidar (laser radar).

In the foregoing embodiment, an example in which one target object exists in the preview image obtained by using the front-facing camera 105 or one target object exists in the preview image obtained by using the rear-facing camera 190 is used for description. In some cases, there may be a plurality of target objects in the preview image obtained by using the front-facing camera 105 or the rear-facing camera 190. In this case, only a target object closest to the mobile terminal 100 needs to be determined.

In this embodiment of this application, the front-facing camera 105 and the rear-facing camera 190 may further implement a same function or have a same structure as the camera 193 shown in FIG. 1.

In some embodiments, in addition to the distance sensor 140, an image of the face or the head of the user may be further obtained by using the front-facing camera 105 of the mobile terminal 100. Then, the second distance between the user and the mobile terminal 100 is determined based on the obtained image of the part of the user.

In some embodiments, the preset condition may further include an action condition in which the user operates the mobile terminal 100. An action of operating the mobile terminal 100 by the user may be tapping a virtual button that is on the screen and that is associated with each sound output mode, pressing an entity button on the mobile terminal 100, and the like.

Based on the preset condition, in step S1702, in response to the action of operating the mobile terminal 100 by the user, the sound output mode of the mobile terminal 100 may be further controlled to be switched to the earpiece mode, the privacy mode, or the play mode.

The user may associate in advance different sound output modes with different virtual buttons on the mobile terminal 100, for example, associate the privacy mode with a digital button 1 on the screen, associate the earpiece mode with a digital button 2 on the screen, and associate the play mode with a digital button 3 on the screen. In this way, in a process in which the user answers an incoming call by using the earpiece mode, if the user wants to switch to the privacy mode, the user only needs to tap the digital button 1. In this case, in step S1702, in response to the action of tapping the digital button 1 by the user, the current earpiece mode or play mode is switched to the privacy mode.

The user may associate in advance different sound output modes with different quantities of times of pressing an entity button, for example, associate the privacy mode with one time of pressing a volume button "+", associate the earpiece mode with two times of pressing the volume button"+", and associate the play mode with three times of pressing the volume button "+". In this way, in a process in which the user answers an incoming call by using the earpiece mode, if the user wants to switch to the privacy mode, the user only needs to press the volume button "+" once. In this case, in step S 1702, in response to the action of pressing the volume button "+" once by the user, the current earpiece mode or play mode is switched to the privacy mode.

In addition, the mobile terminal 100 may further provide a setting page for setting the sound output mode for the user. On the setting page, a mode option such as the privacy mode, the earpiece mode, and the play mode may be displayed. In a process of answering an incoming call, making an outgoing call, or being on a voice call, if the user wants to switch to the privacy mode, the user only needs to select an option corresponding to the privacy mode on the setting page. In this case, in step S 1702, in response to the operation of selecting the option corresponding to the privacy mode by the user, the current earpiece mode or play mode is switched to the privacy mode.

In the foregoing sound output method, the sound output mode may be further switched based on an action of the user, a preset condition, and the like. For example, the earpiece mode may be first used in response to the action of the user, and then it is determined whether the mobile terminal 100 meets the preset condition in the earpiece mode. If the mobile terminal 100 meets the preset condition in the earpiece mode, the earpiece mode is switched to the privacy mode. Alternatively, it is first determined whether a state of the mobile terminal 100 meets the preset condition. If the state meets the preset condition, the privacy mode is used, and then the privacy mode is switched to the earpiece mode or the play mode in response to the action of the user.

It may be learned from the foregoing content that the screen sound production component 104 is disposed on the back side of the screen 101 of the mobile terminal 100 in this embodiment of this application. Therefore, when the user has a high requirement for a sound receiving effect, a high requirement for confidentiality of sound content, or a high requirement for sound quality, the mobile terminal 100 mainly depends on the screen sound production component 104 to drive the screen 101 to vibrate, so as to produce sound, that is, the mobile terminal 100 uses the privacy mode. In the privacy mode, a location at which the screen produces sound is close to the ear of the user. Therefore, it can be ensured that the user directly receives a large amount of sound produced by the screen 101, instead of mainly receiving sound by using a sound output hole 102 on the mobile terminal 100. In this way, the following case can be avoided: When imposing a requirement on sound, the user can receive sound only by using a conventional earpiece mode on the mobile terminal 100. Therefore, the following problem can also be avoided: A large amount of sound produced by the first speaker component in the earpiece mode is leaked when the sound is output from the sound output hole.

In addition, in a high-volume scenario in which play is required, the mobile terminal 100 in this embodiment of this application may also provide the earpiece mode or the play mode in which sound is produced by using the first speaker component 103 and the second speaker component 108. Both a low-volume sound output requirement in some scenarios can be met, and a requirement of playing stereo sound of a multi-speaker can be met.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A mobile terminal for preventing sound leakage, comprising a first speaker component, a sound output hole, and a screen sound production component, wherein
the first speaker component is disposed at a location near a top frame of the mobile terminal;
the sound output hole is disposed on the top frame of the mobile terminal;
the screen sound production component is disposed on a back side of a screen of the mobile terminal, and the screen sound production component is located in an upper half of the screen;
the first speaker component comprises at least two sound production states that are respectively as follows: a maximum volume output by the first speaker component is a first speaker volume, and the maximum volume output by the first speaker component is a second speaker volume, wherein the first speaker volume is less than the second speaker volume;
the screen sound production component comprises at least two sound production states that are respectively as follows: a maximum volume output by the screen sound production component is a first sound production volume, and the maximum volume output by the screen sound production component is a second sound production volume, wherein the first sound production volume is greater than or equal to the second sound production volume; and
the mobile terminal comprises at least a first sound output mode and a second sound output mode, the first sound output mode is that the maximum volume output by the first speaker component is the first speaker volume and the maximum volume output by the screen sound production component is the first sound production volume, the second sound output mode is that the maximum volume output by the first speaker component is the second speaker volume and the maximum volume output by the screen sound production component is the second sound production volume, the first speaker volume is less than the first sound production volume, and the second speaker volume is greater than the second sound production volume.

2. The mobile terminal according to claim 1, further comprising:
a front-facing camera disposed on the mobile terminal, wherein the front-facing camera is close to the top frame and a side frame of the mobile terminal, wherein
the sound output hole is disposed at a center location of the top frame of the mobile terminal; and
the first speaker component is directly opposite to the sound output hole.

3. The mobile terminal according to claim 1, further comprising:
a front-facing camera disposed on the mobile terminal, wherein the front-facing camera is close to a center location of the top frame of the mobile terminal, wherein
the sound output hole is disposed at the center location of the top frame of the mobile terminal; and
the first speaker component is disposed on one side of the front-facing camera.

4. The mobile terminal according to claim 1, further comprising:
a front-facing camera disposed on the mobile terminal, wherein the front-facing camera is close to a center location of the top frame of the mobile terminal, wherein
the first speaker component is disposed on one side of the front-facing camera; and
the sound output hole is directly opposite to the first speaker component.

5. The mobile terminal according to any one of claims 1 to 4, wherein
inside the mobile terminal, there is a sound output channel between the first speaker component and the sound output hole; and
an air exhaust hole is further disposed on the top frame of the mobile terminal, and the air exhaust hole communicates with the sound output channel inside the mobile terminal.

6. The mobile terminal according to any one of claims 1 to 4, wherein
the top of the screen has a curved surface.

7. The mobile terminal according to any one of claims 1 to 4, wherein
the sound output hole is a seam structure, a single-hole structure, or a multi-hole structure.

8. The mobile terminal according to any one of claims 1 to 4, further comprising:
a pressure sensor disposed inside the mobile terminal, wherein the pressure sensor is located in an upper half of the mobile terminal, the pressure sensor is configured to detect external pressure exerted on the screen, and when the external pressure exerted on the screen is greater than or equal to a pressure threshold, the mobile terminal uses the first sound output mode.

9. The mobile terminal according to any one of claims 1 to 4, further comprising:
a distance sensor disposed inside the mobile terminal, wherein the distance sensor is located in an upper half of the mobile terminal, wherein
the distance sensor is configured to detect a second distance between a user and the mobile terminal, and when the second distance is less than or equal to a second distance threshold, the mobile terminal uses the first sound output mode.

10. The mobile terminal according to any one of claims 1 to 4, further comprising:
a microphone disposed inside the mobile terminal, wherein
the microphone is configured to collect ambient sound in an external environment of the mobile terminal, and when a volume of the ambient sound is less than a first volume threshold, the mobile terminal uses the first sound output mode.

11. The mobile terminal according to any one of claims 1 to 4, further comprising:
a rear-facing camera disposed on the mobile terminal, wherein
the rear-facing camera is configured to shoot a target object in a surrounding environment, and when a first distance between the target object and the mobile terminal is less than or equal to a first distance threshold, the mobile terminal uses the first sound output mode.

12. The mobile terminal according to any one of claims 1 to 4, further comprising:
a second speaker component that is disposed inside the mobile terminal and that is close to a bottom frame of the mobile terminal; and
a speaker sound output hole disposed on the bottom frame of the mobile terminal, wherein
the second speaker component is configured to output sound when the mobile terminal uses the first sound output mode, and a maximum volume output by the second speaker component is less than the first sound production volume output by the screen sound production component.

13. A sound output method for a mobile terminal, applied to the mobile terminal according to any one of claims 1 to 12, wherein the method comprises:
determining whether a state of the mobile terminal meets a preset condition; and
if the state of the mobile terminal meets the preset condition, controlling the mobile terminal to use the first sound output mode.

14. The method according to claim 13, wherein the preset condition is any one or more of a volume condition of ambient sound in an external environment in which the mobile terminal is located, a distance condition between the mobile terminal and a target object in an external environment, a use scenario condition of the mobile terminal, a screen pressure-bearing condition of the mobile terminal, and a distance condition between the mobile terminal and a user.

15. The method according to either of claims 13 and 14, wherein the determining whether a state of the mobile terminal meets a preset condition comprises:
collecting the ambient sound in the external environment of the mobile terminal;
determining whether a volume of the ambient sound is less than a first volume threshold; and
if the volume of the ambient sound is less than the first volume threshold, determining that the state of the mobile terminal meets the preset condition.

16. The method according to either of claims 13 and 14, wherein the determining whether a state of the mobile terminal meets a preset condition further comprises:
determining whether a target object exists in a surrounding environment of the mobile terminal;
if the target object exists in the surrounding environment of the mobile terminal, determining a first distance between the target object and the mobile terminal;
determining whether the first distance is less than or equal to a first distance threshold; and
if the first distance is less than or equal to the first distance threshold, determining that the state of the mobile terminal meets the preset condition.

17. The method according to either of claims 13 and 14, wherein the determining whether a state of the mobile terminal meets a preset condition further comprises:
determining whether a current use scenario of the mobile terminal is a preset scenario; and
if the use scenario is the preset scenario, determining that the state of the mobile terminal meets the preset condition.

18. The method according to either of claims 13 and 14, wherein the determining whether a state of the mobile terminal meets a preset condition further comprises:
determining whether external pressure exerted on a screen of the mobile terminal is greater than or equal to a pressure threshold; and
if the external pressure exerted on the screen is greater than or equal to the pressure threshold, determining that the state of the mobile terminal meets the preset condition.

19. The method according to either of claims 13 and 14, wherein the determining whether a state of the mobile terminal meets a preset condition further comprises:
determining a second distance between the user and the mobile terminal;
determining whether the second distance is less than or equal to a second distance threshold; and
if the second distance is less than or equal to the second distance threshold, determining that the state of the mobile terminal meets the preset condition.

20. The method according to claim 17, wherein the determining whether a state of the mobile terminal meets a preset condition further comprises:
determining whether the mobile terminal is currently on an incoming call, an outgoing call, or a voice call; and
if the mobile terminal is on the incoming call, the outgoing call, or the voice call, determining that the current use scenario of the mobile terminal is the preset scenario, and further determining that the state of the mobile terminal meets the preset condition.

21. The method according to claim 20, wherein after the determining whether a state of the mobile terminal meets a preset condition, the method further comprises:
displaying a target mode option; and
in response to an operation of selecting the target mode option by the user, controlling the mobile terminal to use the first sound output mode.

22. The method according to either of claims 13 and 14, wherein after the determining whether a state of the mobile terminal meets a preset condition, the method further comprises:
if the state of the mobile terminal meets the preset condition, controlling the screen sound production component to output sound by using a first sound production volume, controlling the first speaker component to output sound by using a first speaker volume, controlling a second speaker component to output sound by using a third speaker volume, wherein the first sound production volume is separately greater than the first speaker volume and the third speaker volume.
